Europäisches Patentamt

European Patent Office

Office européen des brevets

(11) Numéro de publication: **0 415 851 A1**

# DEMANDE DE BREVET EUROPEEN

(21) Numéro de dépôt: **90402405.6**

(22) Date de dépôt: **31.08.90**

(51) Int. Cl.⁵: **C23C 4/04**, F16C 33/04, C23C 4/10

(30) Priorité: **31.08.89 FR 8911453**

(43) Date de publication de la demande:
**06.03.91 Bulletin 91/10**

(84) Etats contractants désignés:
**DE GB IT**

(71) Demandeur: **REGIE NATIONALE DES USINES RENAULT**
**Boîte postale 103 8-10 avenue Emile Zola**
**F-92109 Boulogne-Billancourt(FR)**

(72) Inventeur: **Desplanches Gérard**
**8, rue Résidence d'Estienne d'Orves**
**F-91120 Palaiseau(FR)**

Inventeur: **Pouget, Georges**
**9, Avenue de la République**
**F-91430 Igny(FR)**
Inventeur: **Blouet, Jean**
**12, rue Pigache**
**F-92210 Saint-Cloud(FR)**
Inventeur: **Gras, René**
**6, rue de Franche Comté**
**F-95570 Bouffemont(FR)**

(74) Mandataire: **Saint Martin, René et al**
**Régie Nationale des Usines Renault 8 & 10,**
**avenue Emile Zola**
**F-92109 Boulogne Billancourt(FR)**

(54) **Revêtement céramique pour pièce de frottement et procédé d'application de ce revêtement.**

(57) Revêtement céramique à faible coefficient de frottement déposé par projection plasma sur une pièce de frottement métallique, caractérisé par le fait que le revêtement contient de l'oxyde de chrome $Cr_2 O_3$ et au moins un fluorure lubrifiant solide appartenant au groupe fluorure de calcium, fluorure de baryum, eutectique fluorure de calcium/fluorure de baryum, fluorure de cérium, fluorure de lithium.

Fig.2

## REVETEMENT CERAMIQUE POUR PIECE DE FROTTEMENT ET PROCEDE D'APPLICATION DE CE REVETE-MENT

La présente invention se rapporte à un revêtement céramique à faible coefficient de frottement déposé par projection à plasma sur une pièce de frottement métallique et à un procédé d'application de ce revêtement.

Les revêtements céramiques sont utilisés comme surfaces de frottement notamment à cause de leur résistance à l'usure.

Des matériaux composites où le métal est associé à des lubrifiants solides tels que le bisulfure de molybdène ou le graphite sont utilisés dans le cas où un faible coefficient de frottement est recherché et où la température est limitée.

Le brevet américain 4.728.448 décrit un composite ayant de bonnes propriétés de frottement, constitué par une matrice à base de carbure de chrome dans laquelle est dispersé un lubrifiant solide de type fluorure. Ce composite est réalisé par pressage à chaud pour donner des pièces massives.

Les couples de surfaces de frottement dont l'un des éléments au moins est en oxyde de chrome $Cr_2 O_3$ donnent de très bons résultats en frottement.

Ainsi le brevet américain 4.761.340 cite parmi différents couples de surfaces un couple dont un composant est un revêtement de $Cr_2 O_3$.

La présente invention a pour but de fournir un revêtement céramique composite doté de caractéristiques de frottement améliorées, à température élevée et en frottement sec. Les caractéristiques d'adhérence sont bonnes.

Par rapport au revêtement d'oxyde de chrome, le revêtement selon l'invention présente un coefficient de friction moyen réduit, peu dispersé et constant dans le temps avec un faible taux d'usure. Comme le revêtement d'oxyde de chrome, ce revêtement peut fonctionner à des températures supérieures à celles permises par les lubrifiants solides traditionnels (graphite, $Mo S_2$).

Le revêtement selon l'invention est caractérisé par le fait que le revêtement contient de l'oxyde de chrome $Cr_2 O_3$ et au moins un fluorure lubrifiant solide appartenant au groupe fluorure de calcium, fluorure de baryum, eutectique fluorure de calcium/fluorure de baryum, fluorure de cérium, fluorure de lithium.

Selon une caractéristique, le revêtement se compose d'une sous-couche dépourvue de fluorure et d'une couche superficielle à base d'oxyde de chrome et de fluorure lubrifiant.

Le procédé d'application du revêtement est caractérisé par le fait qu'il consiste à injecter dans une torche plasma par une première buse la poudre céramique contenant l'oxyde de chrome, et par une seconde buse le lubrifiant solide constitué de fluorure.

L'invention va maintenant être décrite avec plus de détails en se référant aux dessins annexés sur lesquels :
- La figure 1 est une micrographie du revêtement.
- La figure 2 donne les coefficients de frottement des revêtements selon l'invention comparés à ceux de revêtements connus.
- La figure 3 est un graphique donnant les coefficients de frottement des revêtements selon l'invention en fonction du temps de frottement.
- La figure 4 est un graphique donnant (courbe A) le coefficient de frottement en fonction du temps pour un couple $Cr_2 O_3/Cr_2 O_3$ + $Ca F_2$ dont un des composants est le revêtement selon l'invention. A titre de comparaison la courbe B correspond à un couple $Cr_2 O_3$ - $Cr_2 O_3$.

Le revêtement selon l'invention est projeté par projection plasma sur une pièce métallique de frottement.

Ce revêtement se compose d'une fraction céramique comprenant essentiellement de l'oxyde de chrome $Cr_2 O_3$ et d'une fraction lubrifiant solide comprenant au moins un fluorure lubrifiant solide du groupe fluorure de calcium $Ca F_2$, eutectique $Ca F_2/Ba F_2$, fluorure de cérium $Ce F_4$, fluorure de lithium $LiF$.

La fraction fluorure est comprise entre 3 et 60 % en poids. La fraction céramique d'oxyde de chrome forme le solde (complément à 100 %) avec les impuretés.

Le revêtement peut contenir 1 à 20 % d'oxyde de titane $Ti O_2$. Cette addition de $Ti O_2$ intervient pour diminuer la dureté moyenne du revêtement, ce qui est aussi le cas avec l'ajout de lubrifiant solide.

Le tableau 1 ci-dessous donne des exemples de compositions en poids de revêtements conformes à l'invention.

| Numéro | Ca $F_2$ | Cu | $Cr_2 O_3$ |
|--------|----------|--------|------------|
| 1 | 20 % | - | Solde |
| 2 | 10 % | - | Solde |
| 3 | 30 % | - | Solde |
| 4 | 20 % | 10 % | Solde |
| 5 | 32 % | - | Solde |
| 6 | 24 % | 16,7% | Solde |

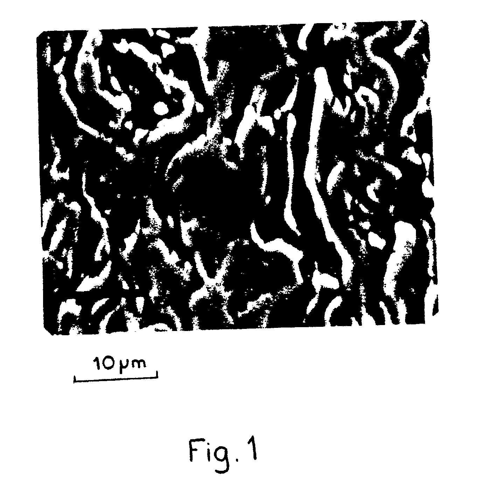

La micrographie de la figure 1 montre la structure du revêtement $Cr_2 O_3$ - Ca $F_2$ examiné au M.E.B (électrons rétrodiffusés). Les plages "gris clair" correspondent au $Cr_2 O_3$. Les plages "gris moyen" au Ca $F_2$, les zones "noires" aux porosités.

Pour obtenir un revêtement de bonne adhérence, on dépose sur le métal de base, avant de déposer la couche superficielle en céramique composite (oxyde de chrome et fluorure lubrifiant), une sous-couche dépourvue de fluorure qui assure l'interface entre la pièce à revêtir et la couche superficielle composite. Cette technique améliore l'adhérence du revêtement sur la pièce à revêtir. Cette sous-couche dépourvue de fluorure peut être constituée par exemple d'oxyde de chrome ou de composés nickel-aluminium.

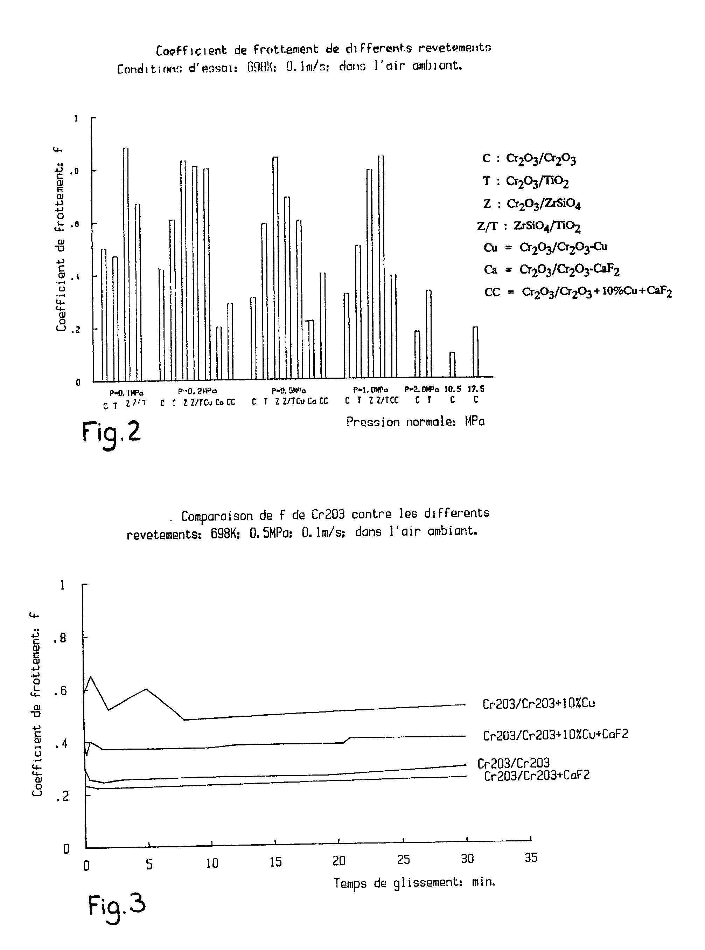

Les figures 2 et 3 montrent que les revêtements selon l'invention présentent un coefficient de fraction plus faible que les revêtements connus (oxyde de chrome, etc...).

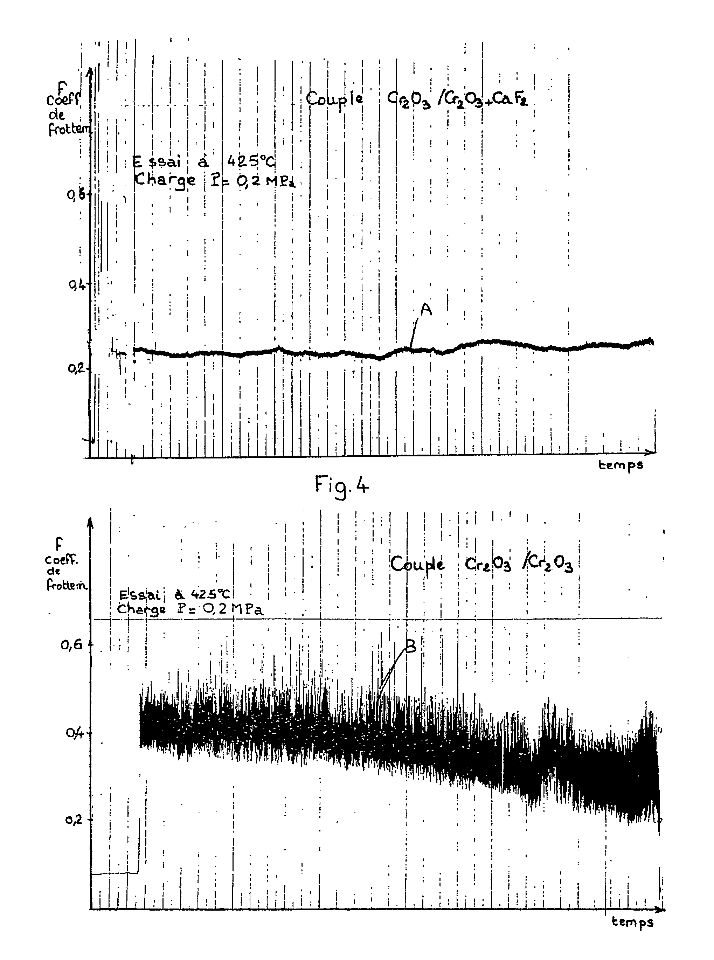

La figure 4 montre que le revêtement selon l'invention procure un coefficient de frottement relativement constant dans le temps et ayant une faible dispersion.

La technique d'application des revêtements selon l'invention est la codéposition plasma. Elle consiste à injecter dans une torche plasma, par une première buse, la poudre céramique (ou le mélange céramique - métal) et simultanément par une seconde buse, le lubrifiant solide. Ces buses sont placées dans le jet plasma dans une zone où la température est acceptable pour le lubrifiant solide et la vitesse suffisante pour le projeter.

Le revêtement selon l'invention peut être utilisé dans un système piston - segment - chemise de moteur chaud ou à lubriciation réduite.

Il est bien entendu que l'on peut sans sortir du cadre de l'invention imaginer des variantes et des perfectionnements de détails et de même envisager l'emploi de moyens équivalents.

## Revendications

1°) Revêtement céramique à faible coefficient de frottement déposé par projection plasma sur une pièce de frottement métallique, caractérisé par le fait que le revêtement contient de l'oxyde de chrome $Cr_2 O_3$ et au moins un fluorure lubrifiant solide appartenant au groupe fluorure de calcium, fluorure de baryum, eutectique fluorure de calcium/ fluorure de baryum, fluorure de cérium, fluorure de lithium.

2°) Revêtement selon la revendication 1, caractérisé par le fait qu'il se compose d'une sous-couche dépourvue de fluorure et d'une couche superficielle à base d'oxyde de chrome et de fluorure lubrifiant.

3°) Revêtement selon la revendication 2, caractérisé par le fait que la sous-couche est constituée d'oxyde de chrome.

4°) Revêtement selon d'une quelconque des revendications précédentes caractérisé par le fait qu'il contient en poids 3 à 60 % de fluorure, l'oxyde de chrome formant le solde.

5°) Revêtement selon la revendication 4, caractérisé par fait qu'il contient 1 à 20 % d'oxyde de titane Ti $O_2$.

6°) Procédé d'application du revêtement selon l'une quelconque des revendications précédentes, caractérisé par le fait qu'il consiste à injecter dans une torche plasma par une première buse la poudre céramique contenant l'oxyde de chrome, et par une seconde buse le lubrifiant solide constitué de fluorure.

3

10 μm

Fig. 1

4

Coefficient de frottement de differents revetements
Conditions d'essai: 698K; 0.1m/s; dans l'air ambiant.

C : $Cr_2O_3/Cr_2O_3$

T : $Cr_2O_3/TiO_2$

Z : $Cr_2O_3/ZrSiO_4$

Z/T : $ZrSiO_4/TiO_2$

Cu = $Cr_2O_3/Cr_2O_3\text{-}Cu$

Ca = $Cr_2O_3/Cr_2O_3\text{-}CaF_2$

CC = $Cr_2O_3/Cr_2O_3 + 10\%Cu + CaF_2$

Fig.2

. Comparaison de f de Cr2O3 contre les differents
revetements: 698K; 0.5MPa; 0.1m/s; dans l'air ambiant.

Fig.3

Couple Cr₂O₃ /Cr₂O₃+CaF₂

Essai à 425°C
Charge P= 0,2 MPa

Fig. 4

Couple Cr₂O₃ /Cr₂O₃

Essai à 425°C
Charge P= 0,2 MPa

**Office européen
des brevets**

**RAPPORT DE RECHERCHE
EUROPEENNE**

Numéro de la demande

**EP 90 40 2405**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-3 711 171 (S.S. ORKIN)<br>* Figures 1-4; colonne 4, lignes 24-34; colonne 5, lignes 5-15 * | 1,4 | C 23 C 4/04<br>F 16 C 33/04<br>C 23 C 4/10 |
| Y | FR-A-1 587 621 (COMMISSARIAT A L'ENERGIE ATOMI-QUE)<br>* Résumé points 1,2,4; page 1, lignes 33-37; page 2, lignes 1-9 * | 1 | |
| Y | PATENT ABSTRACTS OF JAPAN, vol. 6, no. 158 (C-120)[1036], 19 août 1982;<br>& JP-A-57 76 179 (NIPPON PISTON RING) 13-05-1982<br>* Résumé * | 1 | |
| A | DE-B-1 300 460 (MORGANITE RESEARCH & DEVELOP-MENT)<br>* Revendication 1; colonne 3, lignes 16-20 * | 2 | |
| A | US-A-3 121 643 (MARVIN EISENBERG)<br>* Colonne 2, lignes 20-37; revendications 1-12 * | 4 | |
| A | US-A-3 535 006 (S.S. ORKIN)<br>* Revendications points 1,5,6; colonne 3, lignes 14-26; colonne 4, lignes 62-65 * | 5 | DOMAINES TECHNIQUES RECHERCHES (Int. Cl.5)<br><br>C 23 C<br>F 16 C |
| A | GB-A-1 321 481 (ASSOCIATED ENGINEERING)<br>* Revendications 1,2,9,14 * | 6 | |
| A | DE-A-1 771 640 (GOETZEWERKE FRIEDRICH GOETZE)<br>* Revendications 1,3 * | 6 | |

Le présent rapport de recherche a été établi pour toutes les revendications

| Lieu de la recherche | Date d'achèvement de la recherche | Examinateur |
|---|---|---|
| La Haye | 15 novembre 90 | ELSEN D.B.A. |

CATEGORIE DES DOCUMENTS CITES
X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons
............................................................
& : membre de la même famille, document correspondant